# EUROPÄISCHE PATENTANMELDUNG

(11) **EP 1 225 684 A2**
(43) Veröffentlichungstag der Anmeldung: **24.07.2002**
(21) Anmeldenummer: 02001291.0
(22) Anmeldetag: 18.01.2002
(51) Int. Cl.: H02P 1/26

(54) **Verfahren zum schnellen Starten eines Asynchronmotors**

(30) Priorität: 18.01.2001 DE 10102117
(71) Anmelder: Diehl AKO Stiftung & Co. KG, 88239 Wangen (DE)
(72) Erfinder: Zeh, Stefan, 88239 Wangen (DE)
(74) Vertreter: Hofmann, Gerhard, Dipl.-Ing. Patentassessor

(57) **Zusammenfassung**

Um einen Asynchronmotor mit Käfigläufer selbst unter Last extrem schnell und insbesondere noch innerhalb der Zeitspanne der elektromagnetischen Rotorzeitkonstante beschleunigen, also mit sogenanntem Kick-Start anlaufen lassen zu können, werden bei noch stillstehendem Rotor zunächst quasi-stationäre magnetische Verhältnisse wie beim Start eines Wechselfeld-Synchronmotors mit permanent magnetischem Rotor erzeugt. Dafür wird innerhalb der Rotorzeitkonstante kurzzeitig ein sehr hochfrequenter Rotor-Induktionsstrom erzeugt, der noch elektrisch und räumlich quasi stationär ansteht, wenn daraufhin - ebenfalls noch innerhalb der Rotorzeitkonstante - eine starke Gleichfeld-Statordurchflutung mit gegenüber dem Rotorstromvektor um etwa 90° verschwenktem Statorstromvektor für optimales Anlaufdrehmoment eingeprägt wird, woraufhin mit anwachsender Amplitude und Frequenz ein Statordrehfeld einsetzt.

## Beschreibung

Die Erfindung betrifft ein Verfahren gemäß dem Oberbegriff des Anspruches 1.

Das gattungsgemäße Verfahren ist aus der US-PS 59 69 497 als Anlaufschaltung zum Schnellstart (sogenannten Kick-Start) eines aus dem einphasigen Wechselspannungsnetz mit fester Spannung und fester Frequenz dreiphasig in Dreieckschaltung betriebenen Asynchron-Induktionsmotors bekannt und beruht dort auf einer schaltungstechnisch recht kostspieligen gesteuerten Entladung eines zusätzlich beigestellten kapazitiven Speichers zur Gleichstrom-Vormagnetisierung wenigstens eines Statorstranges. Allerdings muß der Kondensator zu Betriebsbeginn zunächst einmal aufgeladen werden, was einen möglichst frühen Einsatz solcher Vormagnetisierung hindert. Außerdem liefert die Kondensatorentladung in einen induktiven Verbraucher mit Eisenkern keinen großen Differentialquotienten des Stromverlaufes über der Zeit und damit keine hohe Induktionswirkung auf den Rotor, so daß gerade zu Bewegungsbeginn des Rotors diese Starthilfsmaßnahme doch nur einen relativ geringfügigen Beitrag zum Startverhalten des Motors erbringt, dessen magnetische Zeitkonstante somit das zeitverzögerte Wirksamwerden dieser Starthilfsmaßnahme bestimmt. Von Nachteil ist hierbei ferner, daß beim Aufschalten der Netzspannung mit fester Frequenz die Vormagnetisierung durch den kapazitiven Entladestrom in Bezug auf das einsetzende Motordrehfeld nicht feldorientiert ist. Solch eine unsynchronisiert umlaufende Vormagnet:isierung führt deshalb zu schwankendem Drehmoment gerade in der betriebskritischen Anlaufphase des belasteten Asynchronmotors und damit zu einem instabilen Betriebsverhalten ähnlich dem Verhalten eines außer Tritt gefallenen Synchronmotors mit permanentmagnetischem Rotor, was dem angestrebten, selbst unter Last extrem raschen aber kinematisch stabilen Hochlauf des Asynchronmotors abträglich ist.

Der Erfindung liegt deshalb die Aufgabe zugrunde, ein definiertes und insbesondere sehr schnelles Hochlaufen des Asynchronmotors selbst unter Last von Stillstand auf Nenndrehzahl noch innerhalb der magnetischen Rotorzeitkonstante erbringen zu können.

Die erfindungsgemäße Lösung dieser Aufgabe ist im Patentanspruch 1 zusammengefaßt. Danach erfolgt der Betrieb des mehrphasigen Induktions- oder Asynchronmotors mit Kurzschlußläufer in Form eines Käfigankers mit plötzlich einsetzendem hohem Anfahrmoment nicht mehr aus einem Wechselspannungsnetz mit fester Amplitude und Frequenz, sondern in als solcher bekannter Weise aus einer Gleichspannungsquelle über einen gesteuerten Umrichter mit pulsmodulierter mehrphasiger Vollbrückenschaltung zum Speisen der Statorstränge des Motors mit praktisch beliebig variierbarer Frequenz und Amplitude. Ein Beispiel für einen solchen Umrichterbetrieb ist beschrieben in dem Beitrag "Digitale Steuerung eines Dreiphasen-Induktionsmotors" von B. Maurice u.a. in Design & Elektronik Heft 8/92 vom 07. April 1992, Seiten 40 bis 46.

Zu Betriebsbeginn des Asynchronmotors wird zunächst, noch vor Aufbau des Drehfeldes, ein Rotorstrom induziert und dann ein vektoriell quer dazu gerichteter Statorstrom eingeschaltet, um ein hohes Anlaufdrehmoment bereits verfügbar zu haben, wenn danach das vom Stator erzeugte magnetische Drehfeld mit stetig wachsender Frequenz einsetzt und den Rotor in Umdrehung versetzt.

Im Rahmen der Erfindung können verschieden Möglichkeiten realisiert werden, um zunächst einen möglichst großen Rotorstrom zu induzieren, während der Rotor noch stillsteht.

So entsteht bei sich räumlich drehender Statorspannung mit großer Frequenz und Amplitude bereits nach wenigen Umdrehungen im Rotor ein stark ausgeprägter Rotorstrom, währenddessen sich der Induktionsmotor im sogenannten abgekippten zustand befindet, in dem er nur ein geringes Drehmoment erzeugt.

Wenn andererseits der Umrichter wenigstens eines Statorstranges mit Gleichspannung angesteuert wird, entsteht durch den anwachsenden Statorstrom ein räumlich feststehendes aber zeitlich anwachsendes Magnetfeld, das einen ebenso wachsenden Rotorstrom in der räumlichen Ebene bewirkt, die senkrecht zu dem Magnetfeld steht. Der Motor erzeugt dabei noch kein Drehmoment. Mit Erreichen des maximalen, also des stationären Statorstromes ist diese Phase beendet, spätestens jetzt wird die Gleichstromspeisung des Statorstranges abgebrochen.

In Weiterbildung dieser Möglichkeit wird dabei zweckmäßigerweise statorseitig ein Übergang von positivem nach negativem Maximalstrom (oder umgekehrt) erzeugt, um bei begrenzter maximaler Amplitude des Statorstromes einen möglichst großen monoton anwachsenden bzw. monoton abfallenden Statorstrom zu erzeugen; wobei hier die Begriffe positiv und negativ räumlich zu verstehen sind, da sie sich auf die räumliche Ausrichtung des aus dem Statorstrom resultierenden magnetischen Feldes beziehen. Einen gewissen Pumpeffekt zum Steigern des Rotorstromes erzielt man, wenn die beschriebene Folge der beiden räumlich entgegengesetzt orientierten induktiven Gleichstromdurchflutungen im Statorstrang mehrmals wiederholt wird. Diese umpolende Gleichspannungsspeisung ersetzt praktisch eine Hochfrequenzspeisung des Stators, die aber im Rahmen vorliegender Erfindung auch eingesetzt werden kann.

Bei Gleichstromerregung wird also im Stillstand eine Gleichspannung möglichst maximaler Amplitude an wenigstens einen der Statorstränge gelegt, bis der Statorstrom gemäß der wirksamen induktiven Zeitkonstante wenigstens angenähert auf sein stationäres Maximum angestiegen ist, und unmittelbar anschießend eine (räumlich) entgegengesetzte Statorspannung mit geringerer Amplitude angelegt, bis der Statorstrom seine maximale negative Amplitude erreicht hat. Das bewirkt einen steil ansteigenden Rotorstrom in positiver Richtung und darauffolgend einen - etwas weniger steil - abfallenden Strom in die negative Richtung. Da der positive Anstieg steiler als die negative Flanke ist, wird der positive Stromanstieg durch den Skineffekt in den Rotorleitern stärker gedämpft, so daß sich der Rotorstrom in positiver Richtung zunächst nicht so stark ausprägt, wie der darauffolgende negative Strom, und schließlich existiert ein starker Rotorstrom mit negativer räumlicher Orientierung.

Zweckmäßigerweise wird zum anfänglichen Induzieren eines möglichst großen Rotorstromes eine Aufeinanderfolge wenigstens zweier der vorgenannten drei Möglichkeiten realisiert. Der Rotorstrom aus der Vormagnetisierung klingt entsprechend der relativ großen Zeitkonstante des Rotors (die typisch in der Größenordnung von ca. 50 msec liegt) nur langsam ab, steht also in der nun unmittelbar folgenden Startphase noch quasistationär an. Da das Drehmoment des Motors proportional zum Vektorprodukt aus momentanem Rotorstrom und momentanem resultierendem Statorstrom ist, also proportional dem Produkt aus den beiden Vektorlängen und dem Sinus des zwischen diesen Vektoren eingeschlossenen Winkels, erfährt der Asynchronmotor nun ein optimales Anlaufmoment zum Einsetzen der Drehbewegung seines Rotors, wenn der eingeprägte Statorstrom räumlich um 90° gegenüber dem Rotorstrom versetzt ist, welcher wie beschrieben durch die Vormagnetisierung zur Verfügung gestellt wurde. Die Statordurchflutung kann nun mit anwachsender Amplitude und Frequenz vorprogrammiert in räumliche Drehbewegung versetzt werden, um den Rotor trotz seines Lastmomentes extrem schnell und stabil von Stillstand auf Nenndrehzahl zu beschleunigen. Dieser programmgesteuerte Anstieg von Frequenz und Amplitude der Statordurchflutung ist in Hinblick auf die Motorkenndaten und das bekannte Lastmoment derart vorgegeben, daß der Vektorwinkel zwischen Statorstrom und Rotorstrom bei etwa 60°, jedenfalls stets über 0° und stets unter 90° liegt, weil das trotz des extrem raschen Anlaufes unter Last aus dem Stillstand heraus ein selbststabilisierendes Motordrehmoment erbringt. Im Falle der Belastung des Motors mit einem drehzalabhängigen Lastmoment ist es zweckmäßig, jedenfalls die Frequenz und eventuell auch die Amplitude des Statorstromes entsprechend drehzahlabhängig zu variieren.

Gemäß einer vorteilhaften Weiterbildung der erfindungsgemäßen Maßnahmen kann es zweckmäßig sein, zu Betriebsbeginn die extrem kurzzeitige hochfrequente Vormagnetisierung bei Rotor-Stillstand wenigstens noch einmal zu wiederholen, um den effektiven Rotorstrom infolge Überlagerung von gleichphasig aufeinanderfolgenden Induktionsströmen noch zu erhöhen, ohne jedoch den Umformer auf eine entsprechend hohe Spitzenstrombelastung auslegen zu müssen. Diese Erhöhung des noch quasi-stationären Rotor-Induktionsstromes kann aber auch einfach durch das beschriebene phasenrichtige Anlegen von Statorgleichspannung mit einem zum Rotorstrom entgegengesetzt gerichteten Statorspannungsvektor unmittelbar vor Einsetzen des Drehfeldes erfolgen.

Um einen Asynchronmotor mit Käfigläufer selbst unter Last extrem schnell und insbesondere noch innerhalb der Zeitspanne der elektromagnetischen Rotorzeitkonstante beschleunigen, also mit sogenanntem Kick-Start anlaufen lassen zu können, werden somit erfindungsgemäß bei noch stillstehendem Rotor zunächst quasi-stationäre magnetische Verhältnisse wie beim Start eines Drehfeld-Synchronmotors mit permanentmagnetischem Rotor erzeugt. Dafür wird innerhalb der Rotorzeitkonstante kurzzeitig ein sehr hochfrequenter Rotor-Induktionsstrom erzeugt, der noch elektrisch und räumlich quasi stationär ansteht, wenn daraufhin - ebenfalls noch innerhalb der Rotorzeitkonstante - eine starke Gleichfeld-Statordurchflutung mit für optimales Anlaufdrehmoment gegenüber dem Rotorstromvektor um etwa 90° verschwenktem Statorstromvektor erzeugt wird, woraufhin mit anwachsender Amplitude und Frequenz das Statordrehfeld einsetzt. So wird der Induktionsmotor mittels über den Umrichter gesteuerter Statorbestromung angefahren, ohne irgendwelche Drehzahl-, Drehwinkel- oder Stromsensoren zur Rückmeldung von Betriebszuständen für eine Anfahrregelung zu benötigen.

## Patentansprüche

1. Verfahren zum schnellen Starten eines Asynchronmotors mit Käfigläufer unter Last bei beschleunigtem Aufbau eines Motordrehmomentes durch Vormagnetisierung,
**dadurch gekennzeichnet,**
**daß** dem Stator über einen programmgesteuerten Umformer noch während des Stillstandes des Motors eine zeitlich sich ändernde Durchflutung eingeprägt wird, die im Rotor einen Induktionsstrom aufbaut, worauf unmittelbar anschließend ein Statorstrom eingeprägt wird, dessen Raumvektor etwa senkrecht zu dem noch quasi stationär anstehenden Vektor des Rotorstromes orientiert ist, um schließlich mit Beginn der Rotor-Bewegung ein Statordrehfeld mit anwachsender Frequenz und Amplitude einsetzen zu lassen.

2. Verfahren nach Anspruch 1,
**dadurch gekennzeichnet,**
**daß** zum Erzeugen der sich zeitlich ändernden Statordurchflutung eine Gleichspannung an den Stator angelegt wird, bis der Statorstrom angenähert auf seine maximale Größe angestiegen ist.

3. Verfahren nach Anspruch 1 oder 2,
**dadurch gekennzeichnet,**
**daß** zum Erzeugen der sich zeitlich ändernden Statordurchflutung eine Gleichspannung hoher Amplitude und unmittelbar anschließend eine Gleichspannung mit kleinerer Amplitude bei räumlich entgegengesetzter Orientierung an den Stator angelegt wird.

4. Verfahren nach Anspruch 3,
**dadurch gekennzeichnet,**
**daß** die Folge der beiden Statordurchflutungen mehrmals wiederholt wird.

5. Verfahren nach Anspruch 1,
**dadurch gekennzeichnet,**
**daß** der Stator mit einem räumlich hochfrequent rotierenden Statorstrom gespeist wird.

6. Verfahren nach einem der vorangehenden Ansprüche, **gekennzeichnet durch** eine Kombination der Maßnahmen gemäß Anspruch 5 mit denen gemäß Anspruch 2, 3 oder 4.

7. Verfahren nach einem der vorangehenden Ansprüche,
**dadurch gekennzeichnet,**
**daß** mit Einsetzen einer Drehbewegung des Rotors das Statordrehfeld nach Maßgabe einer Drehzahlabhängigkeit des Lastmomentes in Frequenz und Amplitude drehzahlabhängig aufgebaut wird.

8. Verfahren nach einem der vorangehenden Ansprüche,
**dadurch gekennzeichnet,**
**daß** die auf wenigstens eine hochfrequente Vormagnetisierung folgende Gleichfeld-Vormagnetisierung mittels eines resultierenden Spannungsvektors erfolgt, der dem Vektor des zuvor induzierten Rotorstromes wenigstens angenähert entgegengesetzt gerichtet ist.
